# EUROPÄISCHE PATENTSCHRIFT

(11) **EP 2 688 510 B1**
(45) Veröffentlichungstag und Bekanntmachung des Hinweises auf die Patenterteilung: **13.05.2015**
(21) Anmeldenummer: 12710861.1
(22) Anmeldetag: 02.02.2012
(51) Int. Cl.: A61C 8/00

(54) **DENTALIMPLANTAT**
DENTAL IMPLANT
IMPLANT DENTAIRE

(30) Priorität: 21.03.2011 DE 102011015299
(43) Veröffentlichungstag der Anmeldung: 29.01.2014
(73) Patentinhaber: ZM Präzisionsdentaltechnik GmbH, 18055 Rostock (DE)
(72) Erfinder: MITROVIC, Milija, 18055 Rostock (DE); ZOTHNER, Aurcica, 18055 Rostock (DE)
(74) Vertreter: Marschall, Stefan
(86) Internationale Anmeldenummer: PCT/DE2012/000110
(87) Internationale Veröffentlichungsnummer: WO 2012/126450

(56) Entgegenhaltungen:
- EP-A1- 2 039 320
- EP-A1- 2 168 530
- WO-A2-2011/006459
- DE-A1- 10 340 059
- DE-U1- 8 702 526

## Beschreibung

Die Erfindung betrifft ein Dentalimplantat mit einem Verankerungselement, bei dem zumindest die Außenfläche aus einem keramischen Werkstoff besteht und zu dessen Verankerung im Kieferknochen ausgebildet ist und das mit einer Aufnahme für ein Aufbauelement versehen ist, an dem seinerseits ein Zahnersatz befestigbar ist, wobei das Verankerungselement in seinem Inneren eine aus einem metallischen Werkstoff bestehende, mit einem Innengewinde versehene und im Verankerungselement mittels eines Glaslots verlötete Aufnahme in Form einer Gewindehülse für einen am Aufbauelement angeordneten metallischen Gewindestift aufweist und wobei die Aufnahme vom okklusalen Ende des Verankerungselements her in eine Bohrung eingesetzt ist.

Zweiteilige Dentalimplantate sind bereits aus den DE 10 2004 027 959 A1 und 10 2005 008 273 A1 bekannt geworden und sind heute allgemeiner Stand der Technik. Neben solchen zweiteiligen Dentalimplantaten finden aber auch weiterhin einteilig ausgebildete Dentalimplantate, wie sie beispielsweise in der DE 101 59 683 A1 beschrieben sind, in der zahnärztlichen Therapie Verwendung, um erkrankte oder fehlende Zähne vollständig zu ersetzen. Derartige Dentalimplantate können im kosmetisch relevanten sichtbaren Vorder- und Seitenzahnbereich eingesetzt werden. Zudem können sie als Halteelement für herausnehmbaren Zahnersatz oder Spezialanwendungen, z.B. in der Kieferorthopädie, dienen.

Da einteilige Dentalimplantate, bei denen das Verankerungselement und das Aufbauelement oder Abutment eine Einheit bilden, wegen der mit ihrer Handhabung und ihren Materialeigenschaften verbundenen Gefahr des Auftretens von Divergenzen, Frakturen, und wegen des schwierigen Individualisierens eher als problematisch anzusehen sind, finden hauptsächlich zweiteilige Dentalimplantate in der zahnärztlichen Therapie Verwendung. Zur Insertion solcher zweiteiligen Dentalimplantate wird in einem ersten Schritt das Verankerungselement in den Kieferknochen implantiert, wobei es eine bereits bekannte Maßnahme darstellt, das Verankerungselement mit einem Außengewinde zu versehen, das in den Kieferknochen eingeschraubt wird. In einem späteren Schritt wird dann das Aufbauelement oder Abutment als Suprakonstruktion am Verankerungselement befestigt, schließlich wird auf das Abutment eine Krone, ein herausnehmbarer Zahnersatz oder anderes aufgesetzt. Das Abutment ist üblicherweise entweder als gerader abgewinkelter oder als funktionsspezifischer Aufbau, beispielsweise in Form eines Konus, einer Kugel oder eines sogenannten Locators, ausgebildet und wird bei den meisten bekannten zweiteiligen Dentalimplantaten mittels einer in das Verankerungselement einzudrehenden Schraube an diesem befestigt.

Ein wesentlicher Nachteil zweiteiliger Dentalimplantate kann in ihrem optischen Erscheinungsbild begründet sein. Die Verbindung zwischen dem Verankerungselement und dem Aufbauelement wird bei den bekannten Systemen häufig mittels eines Gewindes hergestellt, das die Verwendung zugfester Materialien zur Erzielung der erforderlichen Festigkeit des Gesamtimplantats erfordert, weshalb sowohl das Verankerungselement als auch das Aufbauelement üblicherweise aus Titan beziehungsweise einer hochfesten Titanlegierung hergestellt werden. Dies kann insofern problematisch sein, als das Titanmaterial zwar in der Regel durch eine der Zahnfarbe angepaßte Krone verdeckt wird, sich in vielen Fällen das Zahnfleisch jedoch postoperativ etwas zurückbilden kann. Zudem kann das Implantat nicht immer ideal platziert werden. Beides kann zu einem die Ästhetik beeinträchtigenden dunklen Saum zwischen Zahn und Zahnfleisch führen, der durch freiliegenden Titanwerkstoff verursacht wird. In diesem Fall ist zudem die vergleichsweise hohe Plaqueaffinität von strukturierten Dentalkomponenten aus Titanwerkstoffen von Nachteil.

Aus diesem Grund wurde auch bereits in den genannten DE 10 2004 027 959 A1 und 10 2005 008 273 A1 vorgeschlagen, bei einem zweiteiligen Dentalimplantat ein Verankerungselement aus einem keramischen Werkstoff, insbesondere aus Zirkoniumdioxid oder seinen Varianten, zu verwenden. An diesem Verankerungselement wird bei den bekannten Anordnungen das Abutment mittels Verkleben befestigt. Eine weitere bekannte Lösung besteht darin, das keramische Verankerungselement mit einem innen liegenden keramischen Gewinde zu versehen, in das eine Abutmentschraube eingedreht wird. Da diese Abutmentschraube aus Metall, in der Regel aus einer Titanlegierung, besteht, werden in diesem Fall zwei Werkstoffe mit sehr unterschiedlichen mechanischen und tribologischen Eigenschaften miteinander kombiniert. Dadurch kann es zu einer Abnutzung des schwächeren Werkstoffs mit der Folge von Schraubenlockerungen unter Funktion sowie Frakturen sowohl innerhalb der Schraube als auch in der Implantatschulter kommen, zudem können Erscheinungen wie Gewindeausrisse in der Keramik oder abrasiver Abtrag an einem der beiden beteiligten Partner problematisch sein.

Um solche Probleme zu verhindern, wurde in der EP 2 309 320 A1 ein Dentalimplantat vorgeschlagen, das zumindest an seiner Außenseite aus einem keramischen Werkstoff gefertigt ist und das an seiner dem koronalen oder zervikalen Bereich zugewandten Seite mit einer Ausnehmung versehen ist, in die eine metallische Gewindehülse, in der ein Aufbauelement befestigbar ist, mittels Löten oder Laserfügens stoffschlüssig eingesetzt wird.

Schließlich wird in der DE 103 40 059 A1 eine Dentalimplantat der eingangs genannten Art beschrieben, bei dem eine mit einem Innengewinde versehene Gewindehülse aus Titan okklusal in eine Innenbohrung des Verankerungselements eingeführt wird. An dieser Gewindehülse wird dann ein Aufbauelement befestigt. Die Gewindehülse ist mittels eines Glaslotes in der Innenbohrung des Verankerungselements verklebt. Überschüssiges Glaslot kann sich in Retentionsrillen der Gewindehülse oder in einer Sacklochbohrung am unteren Ende des Verankerungselementes sammeln.

Aufgabe der Erfindung ist es, ein zweiteiliges Dentalimplantat der eingangs genannten Art so auszubilden, dass einerseits die Verbindung zwischen dem Verankerungselement und dem Aufbauelement eine optimale Festigkeit und Spaltfreiheit aufweist und dass andererseits metallische Verbindungskomponenten nach erfolgter Implantation vollständig abgedeckt sind.

Die Erfindung löst diese Aufgabe, indem im zervikalen Endbereich des Verankerungselements eine Bohrung geringeren Durchmessers vorgesehen ist, durch die während des Lötvorgangs überschüssiges Glaslot abfließen kann, das zugleich beim Erstarren diese Bohrung verschließt.

Das Verankerungselement besteht dabei vorzugsweise aus Zirkoniumdioxid oder einer seiner Varianten. Darüber hinaus ist es besonders vorteilhaft, wenn die äußere Oberfläche des Verankerungselementes strukturiert ausgebildet und mit einer Glasmatrix beschichtet ist. Dadurch wird nicht nur eine optimale Funktionalisierung dieser Oberfläche erreicht, sondern es wird durch die Beschichtung mit einer Glasmatrix zugleich die Strukturgebung der Oberfläche im Vergleich zu einer nicht auf diese Weise konditionierten Oberfläche aus Zirkoniumdioxid wesentlich erleichtert, indem die Glasmatrix durch ein abtragendes Verfahren strukturierbar ist.

Nachfolgend soll die Erfindung anhand von in der Zeichnung dargestellten Ausführungsbeispielen näher erläutert werden. Es zeigen;
- Fig. 1: eine perspektivische Darstellung eines Dentalimplantats,
- Fig. 2: einen vertikalen Schnitt durch die in Fig. 1 dargestellte Anordnung,
- Fig. 3: eine Darstellung des Einsetzens einer Aufnahme in das Innere der in Fig. 1 dargestellten Anordnung,
- Fig. 4: die Anordnung gemäß Fig. 1 in Draufsicht,
- Figuren 5 - 7: drei verschiedene Ausführungen einer Aufnahme jeweils in Draufsicht und in perspektivischer Darstellung.

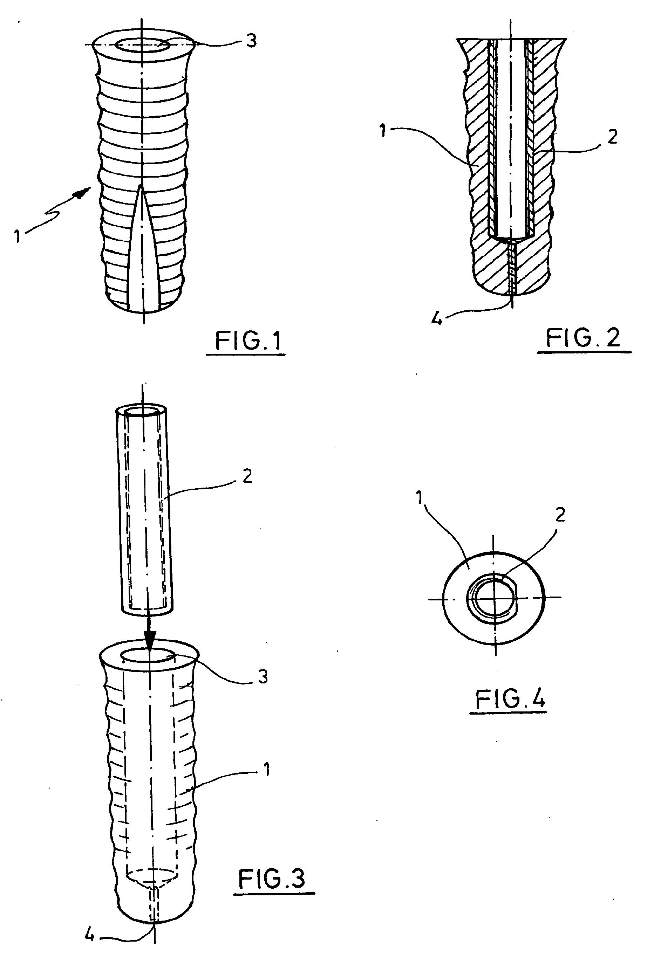

Die Darstellung gemäß Fig. 1 zeigt ein Verankerungselement 1 eines Dentalimplantats in perspektivischer Darstellung.

In das Verankerungselement 1, das im Fall des hier beschriebenen Ausführungsbeispiels aus einer Keramik auf Zirkoniumdioxidbasis besteht, ist, wie insbesondere aus der Schnittdarstellung in Fig. 2 hervorgeht, eine zylinderförmige, einseitig offene Aufnahme 2 eingesetzt. Letztere besteht aus einer Titanlegierung, im Fall des hier beschriebenen Ausführungsbeispiels Titan Grade 5 (Titan - 6 Aluminium - 4 Vanadium), und ist mit einem Innengewinde versehen, in das ein an einem in der Figur nicht dargestellten Aufbauelement oder Abutment angeordneter metallischer Gewindestift, der üblicherweise ebenfalls aus Titan Grade 5 besteht, einschraubbar ist. Die Aufnahme 2 ist im Fall des in dieser Figur dargestellten Ausführungsbeispiels und wie insbesondere auch aus der Darstellung gemäß Fig. 3 hervorgeht vom Bereich der Mundhöhle, d.h. vom okklusalen Ende des Verankerungselementes 1 her, in eine Bohrung 3 eingesetzt. Die Aufnahme 2 wird bei dem hier beschriebenen Ausführungsbeispiel mittels eines Glaslotes mit dem Inneren des Verankerungselementes 1 verlötet. Durch eine weitere Bohrung 4 geringen Durchmessers im zervikalen Endbereich des Verankerungselementes 1 kann dabei während des Lötvorganges überschüssiges Glaslot abfließen, das zugleich beim Erstarren diese Bohrung 4 verschließt.

Wie die Darstellung gemäß Fig. 4 zeigt, ist ein Teilbereich der Außenfläche der Aufnahme 2 abgeflacht ausgebildet und dient dadurch zugleich als Verdrehsicherung, sobald dieser abgeflachte Bereich an einen entsprechend ausgebildeten Bereich der Bohrung 4 des Verankerungselementes 1 zur Anlage gelangt.

In den Figuren nicht erkennbar ist, dass die äußere Oberfläche des Verankerungselementes 1 ganz oder zumindest in Teilbereichen mit einer Glasmatrix beschichtet ist, die durch ein abtragendes Verfahren strukturiert und dadurch in der Weise funktionalisiert ist, dass sie das Besiedeln mit Knochenzellen und in der Folge das Einwachsen des Implantats in den Kieferknochen begünstigt. Da die Beschichtung der Oberfläche mit der Glasmatrix bei einer höheren Temperatur als das Verlöten der Aufnahme 2 mit dem Verankerungselement 1 erfolgt, wird diese Beschichtung in einem ersten Schritt durchgeführt, gefolgt vom Zusammenbau und dem Verlöten der Aufnahme im Inneren des verankerungselementes. Die Konditionierung der Glasmatrix erfolgt beispielsweise durch Sandstrahlen oder Ätzen, wobei die Oberfläche des Verankerungselementes derart funktionalisiert wird, dass sie das Besiedeln mit Knochenzellen und damit das Einwachsen des Implantates in den Kieferknochen begünstigt.

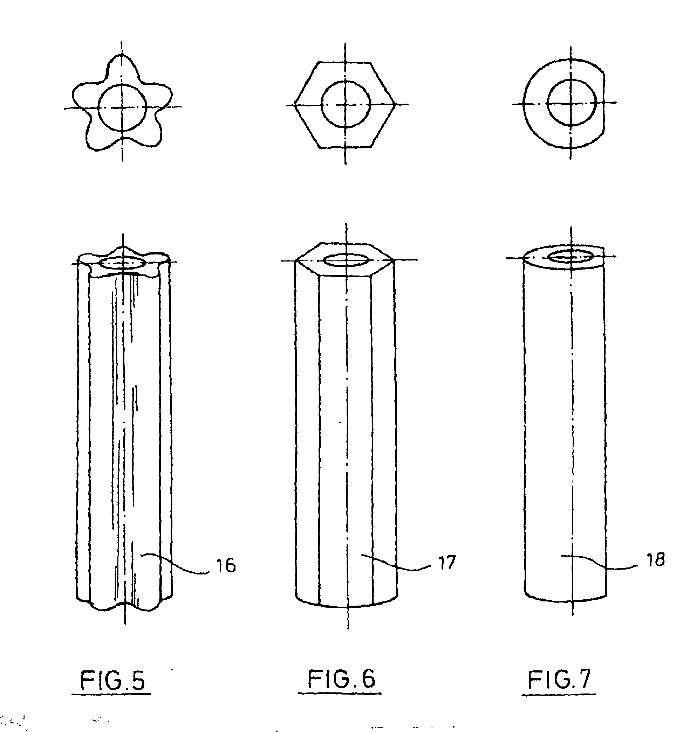

Abschließend sind in den Figuren 5 bis 7 verschiedene Ausbildungen der äußeren Form einer Aufnahme 16, 17, 18 jeweils in Draufsicht und in perspektivischer Darstellung gezeigt. In jedem der dargestellten Fälle ist die äußere Formgebung der Aufnahmen 16 bis 18 so ausgebildet, dass sie im Zusammenwirken mit einer entsprechenden Formgebung der Bohrung im jeweiligen Verankerungselement verdrehsicher fixierbar sind und damit nach erfolgten Verlöten als Rotationsschutz dienen.

## Patentansprüche

1. Dentalimplantat mit einem Verankerungselement (1), bei dem zumindest die Außenfläche aus einem keramischen Werkstoff besteht und zu dessen Verankerung im Kieferknochen ausgebildet ist und das mit einer Aufnahme (2) für ein Aufbauelement versehen ist, an dem seinerseits ein Zahnersatz befestigbar ist, wobei das Verankerungselement (1) in seinem Inneren eine aus einem metallischen Werkstoff bestehende, mit einem Innengewinde versehene und im Verankerungselement mittels eines Glaslots verlötete Aufnahme (2) in Form einer Gewindehülse für einen am Aufbauelement angeordneten metallischen Gewindestift aufweist, und wobei die Aufnahme (2) vom okklusalen Ende des Verankerungselements her in eine Bohrung (3) eingesetzt ist, **dadurch gekennzeichnet, dass** im zervikalen Endbereich des Verankerungselements (1) eine Bohrung (4) geringeren Durchmessers vorgesehen ist, durch die während des Lötvorgangs überschüssiges Glaslot abfließen kann, das zugleich beim Erstarren diese Bohrung (4) verschließt.

2. Dentalimplantat nach Anspruch 1, **dadurch gekennzeichnet, dass** das Verankerungselement (1) aus Zirkoniumdioxid oder einer seiner Varianten besteht.

3. Dentalimplantat nach einem der Ansprüche 1 oder 2, **dadurch gekennzeichnet, dass** die Außenfläche der Aufnahme (2) mit einem Rotationsschutz gegenüber dem Verankerungselement (1) versehen ist.

4. Dentalimplantat nach einem der Ansprüche 1 bis 3, **dadurch gekennzeichnet, dass** die Aufnahme (2) aus einem Titanwerkstoff besteht.

5. Dentalimplantat nach einem der Ansprüche 1 bis 4, **dadurch gekennzeichnet, dass** die äußere Oberfläche des Verankerungselementes (1) strukturiert ausgebildet ist.

6. Dentalimplantat nach einem der Ansprüche 1 bis 5, **dadurch gekennzeichnet, dass** zumindest Teilbereiche der äußeren Oberfläche des Verankerungselementes (1) mit einer Glasmatrix beschichtet sind, die durch ein abtragendes Verfahren strukturiert ist.

## Claims

1. A dental implant having an anchoring element (1), with which at least the exterior surface is made of a ceramic material, designed for anchoring same in the jawbone, and is provided with a receptacle (2) for an abutment element, to which a dental prosthesis can be attached, wherein the anchoring element (1) has in its interior a receptacle (2) that is made of a metallic material, is provided with an internal thread and is soldered in the anchoring element by means of a glass solder, this receptacle being in the form of a threaded sleeve for a metallic threaded pin, which is arranged on the abutment element, and wherein the receptacle (2) is inserted into a borehole (3) from the occlusal end of the anchoring element,
**characterized in that**
a borehole (4) having a smaller diameter is provided in the cervical end region of the anchoring element (1), such that excess glass solder can flow out through this borehole during the soldering operation, and at the same time, when the solder solidifies, it seals this borehole (4).

2. The dental implant according to Claim 1,
**characterized in that**
the anchoring element (1) consists of zirconium dioxide or one of its variants.

3. The dental implant according to any one of Claims 1 or 2,
**characterized in that**
the exterior surface of the receptacle (2) is provided with anti-rotation protection with respect to the anchoring element (1).

4. The dental implant according to any one of Claims 1 to 3,
**characterized in that**
the receptacle (2) consists of a titanium material.

5. The dental implant according to any one of Claims 1 to 4,
**characterized in that**
the exterior surface of the anchoring element (1) is designed to be a structured surface.

6. The dental implant according to any one of Claims 1 to 5,
**characterized in that**
at least partial regions of the exterior surface of the anchoring element (1) are coated with a glass matrix, which is structured by an erosive method.

## Revendications

1. Implant dentaire comprenant un élément d'ancrage (1), dans lequel au moins la surface extérieure est composée d'un matériau céramique et est réalisée dans l'os maxillaire pour l'ancrage de celui-ci, et qui est muni d'un logement (2) pour un élément de superstructure auquel une prothèse dentaire peut être fixée à son tour, dans lequel l'élément d'ancrage (1) présente à l'intérieur de celui-ci un logement (2) composé d'un matériau métallique, muni d'un taraudage et brasé dans l'élément d'ancrage au moyen de verre de brasure, sous la forme d'une douille taraudée pour une tige filetée métallique disposée au niveau de l'élément de superstructure, et dans lequel le logement (2) est placé dans un perçage (3) par l'extrémité occlusale de l'élément d'ancrage, **caractérisé en ce que** dans la zone d'extrémité cervicale de l'élément d'ancrage (1), un perçage (4) de diamètre inférieur est prévu par lequel le verre de brasure excédentaire peut s'écouler pendant l'opération de brasage et qui en se solidifiant referme en même temps ledit perçage (4).

2. Implant dentaire selon la revendication 1, **caractérisé en ce que** l'élément d'ancrage (1) se compose de dioxyde de zirconium ou d'une de ses variantes.

3. Implant dentaire selon l'une quelconque des revendications 1 ou 2, **caractérisé en ce que** la surface extérieure du logement (2) est munie d'un dispositif anti-rotation par rapport à l'élément d'ancrage (1).

4. Implant dentaire selon l'une quelconque des revendications 1 à 3, **caractérisé en ce que** le logement (2) se compose d'un matériau en titane.

5. Implant dentaire selon l'une quelconque des revendications 1 à 4, **caractérisé en ce que** la surface extérieure de l'élément d'ancrage (1) est réalisée de manière texturée.

6. Implant dentaire selon l'une quelconque des revendications 1 à 5, **caractérisé en ce qu'**au moins des zones partielles de la surface extérieure de l'élément d'ancrage (1) sont recouvertes d'une matrice de verre qui est texturée par un procédé d'enlèvement.
